# EUROPEAN PATENT APPLICATION

(11) **EP 2 530 577 A2**
(43) Date of publication of application: **05.12.2012**
(21) Application number: 12161322.8
(22) Date of filing: 26.03.2012
(51) Int. Cl.: G06F 3/048

(54) **Display apparatus and method**

(30) Priority: 30.05.2011 KR 20110051664; 09.12.2011 KR 20110132131
(71) Applicant: Samsung Electronics Co., Ltd., Suwon-si, Gyeonggi-do, 443-742 (KR)
(72) Inventor: Bang, Hyo-sang, Seoul (KR); Seung, Jung-ah, Gyeonggi-do (KR); Lim, Eun-sil, Seoul (KR)
(74) Representative: Clark, David James

(57) **Abstract**

A display apparatus and method capable of displaying main content and auxiliary content on the same screen, switching the contents displayed on the screen with each other, and displaying a plurality of contents as auxiliary contents by expanding an area of the screen that displays auxiliary content.

## Description

### BACKGROUND

### 1. Field

One or more aspects of the present invention relate to a display apparatus and method.

### 2. Description of the Related Art

In general, in a display mode, a digital photographing apparatus, such as a digital camera or a camcorder, displays an image or video stored in a recording medium on a display screen thereof. Also, data of a captured image and data of captured video may be related to each other.

For example, a video and a photo may be simultaneously captured by dual shooting or dual recording. However, files of the captured video and photo cannot be displayed simultaneously and are thus individually displayed and viewed.

### SUMMARY

One or more aspects of the present invention provide a display apparatus and method for displaying main content and auxiliary content on the same screen together or switching the displayed contents with each other, and displaying more contents as auxiliary contents on an area displaying auxiliary content.

According to an aspect of the present invention, a display apparatus includes a display control unit for displaying first content on a first area of a display screen, and second content on a second area of the display screen; and a user input sensing unit for sensing a touch-and-drag input on the second area, wherein the display control unit expands the second area in a first direction according to the sensed touch-and-drag input, and displays a plurality of third contents on the expanded second area.

The plurality of third contents may include the second content.

The first direction may include a direction in which dragging is performed.

The sensed touch-and-drag input may include a plurality of touch-and-drag inputs, and the second area may be expanded in directions in which drag inputs included in the plurality of touch-and-drag inputs are performed.

The user input sensing unit may sense a touch and drag input performed in a direction that is different from a direction in which the sensed touch-and-drag input is performed. The display control unit may reduce the expanded second area to its original size, according to the drag input performed in the different direction.

The first content may be video data, and the second content may be still image data.

The still image data may constitute part of the video data.

The second content may be thumbnail still image data obtained by reducing the size of the still image data.

The display control unit may display the plurality of third contents in a slideshow format.

The display control unit may display the plurality of third contents at a speed corresponding to a speed of displaying the video data.

The first area may be a main area of the display screen, and the second area may be an auxiliary area of the display screen.

The second area may be movable on the display screen by touching and dragging the second area on the display screen.

The first content may be map data, and the second data may be still image data.

The still image data may correspond to a location on the map data.

The first content may be broadcast data, and the second content may be broadcast channel data.

The plurality of third contents may include broadcast channel data provided from the display apparatus.

The first content may be live view image data, and the second content may be a functional icon.

The second content may be a toggle type button icon, and the plurality of third contents may be button icons in a list format.

According to another aspect of the present invention, a display apparatus includes a display control unit for displaying first content on a first area of a display screen, and second content on a second area of the display screen; and a user input sensing unit for sensing a touch-and-drag input on the second area, wherein the display control unit expands the second area in a first direction according to the sensed touch-and-drag input, and displays the second content on the first area and a plurality of third contents on the expanded second area.

The plurality of third contents may include the first content.

The first direction may include a direction in which dragging is performed.

The sensed touch-and-drag input may include a plurality of touch-and-drag inputs, and the second area may be expanded in directions in which drag inputs included in the plurality of touch-and-drag inputs are performed.

The user input sensing unit may sense a drag input performed in a direction that is different from a direction in which the sensed touch-and-drag input is performed. The display control unit may reduce the expanded second area to its original size, according to the drag input performed in the different direction.

According to another aspect of the present invention, a display method includes displaying first content on a first area of a display screen, and second content on a second area of the display screen; sensing a touch-and-drag input on the second area; expanding the second area in a first direction according to the sensed touch-and-drag input; and displaying a plurality of third contents on the expanded second area.

According to another aspect of the present invention, a display method includes displaying first content on a first area of a display screen, and second content on a second area of the display screen; sensing a touch-and-drag input on the second area; expanding the second area in a first direction according to the sensed touch-and-drag input; and displaying the second content on the first area and a plurality of third contents on the expanded second area.

According to the present invention there is provided an apparatus and method as set forth in the appended claims. Other features of the invention will be apparent from the dependent claims, and the description which follows.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of a digital camera as an example of a display apparatus, according to an embodiment of the present invention;
FIG. 2 is a block diagram a digital signal processor (DSP) of FIG. 1, according to an embodiment of the present invention;
FIGS. 3A to 3C are diagrams for describing displaying of a still image and video, according to an embodiment of the present invention;
FIGS. 4A to 4E are diagrams for describing displaying of a still image and video, according to another embodiment of the present invention;
FIGS. 5A and 5B are diagrams for describing displaying of a still image and video, according to another embodiment of the present invention;
FIGS. 6 and 7 are diagrams for describing displaying of map information and a still image, according to another embodiment of the present invention;
FIGS. 8A to 9B are diagrams for describing displaying of broadcast information and broadcast channel information, according to another embodiment of the present invention;
FIGS. 10A to 11 B are diagrams for describing displaying of a live view image and functional icons, according to another embodiment of the present invention;
FIGS. 12A to 12C are diagrams for describing displaying of a live view image and buttons, according to another embodiment of the present invention; and
FIG. 13 is a flowchart illustrating a display method according to an embodiment of the present invention.

### DETAILED DESCRIPTION

Hereinafter, various embodiments of the present invention will be described in detail with reference to the attached drawings. Those components that are the same or are in correspondence are rendered the same reference numeral regardless of the figure number, and redundant explanations are omitted.

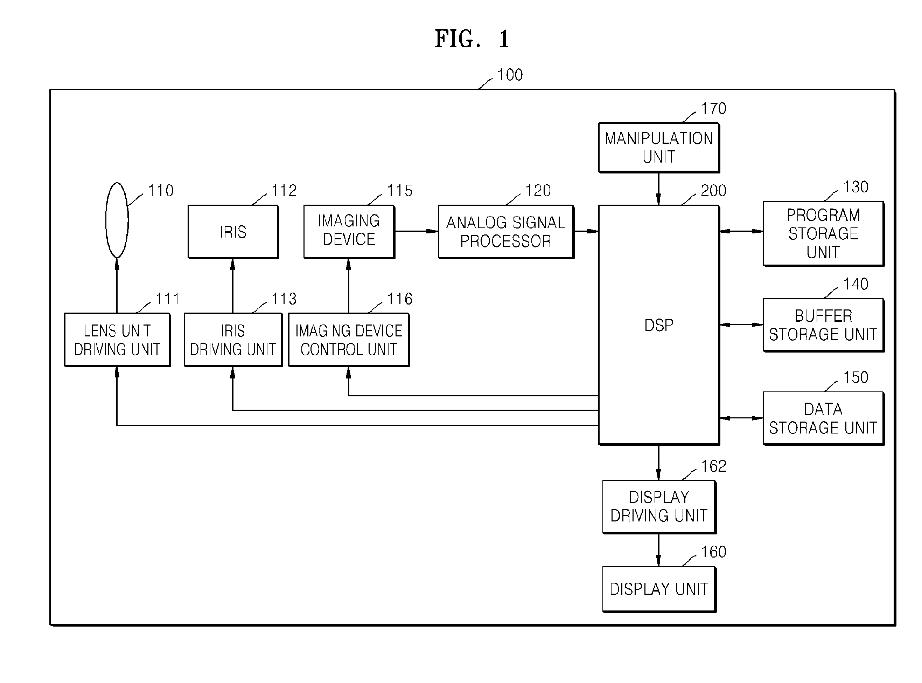

FIG. 1 is a block diagram of a digital camera 100 as an example of a display apparatus, according to an embodiment of the present invention.

The digital camera 100 will be described as an example of the display apparatus according to the current embodiment. However, the display apparatus is not limited to the digital camera 100, and may be another type of mobile apparatus, such as a camera phone, a personal digital assistant (PDA), a portable multimedia player (PMP), and a camcorder, or a home appliance, such as a television (TV) and a monitor, which are capable of displaying various types of content.

The digital camera 100 may include a lens unit 110, a lens unit driving unit 111, an iris 112, an iris driving unit 113, an imaging device 115, an imaging device control unit 116, an analog signal processor 120, a program storage unit 130, a buffer storage unit 140, a data storage unit 150, a display driving unit 162, a display unit 160, a digital signal processor (DSP) 200, and a manipulation unit 170. The lens unit 110, the lens unit driving unit 111, the iris 112, the iris driving unit 113, the imaging device 115, the imaging device control unit 116, and the analog signal processor 120 may be referred to altogether as an imaging unit.

The lens unit 110 focuses incident light. The lens unit 110 includes a zoom lens for controlling a viewing angle to be increased or decreased according to a focal length and a focus lens for adjusting a focus of a subject. The zoom lens and the focus lens each may be formed of a single lens or a group of a plurality of lenses. The iris 112 adjusts an amount of incident light by controlling an opening thereof.

The lens unit driving unit 111 and the iris driving unit 113 receive a control signal from the DSP 200 and respectively drive the lens unit 110 and the iris 112. The lens unit driving unit 111 adjusts the focal length by controlling a position of a lens to perform operations of auto-focusing, zoom change, and focus change. The iris driving unit 113 adjusts an opening degree of the iris 112, particularly an f number or iris value, to perform operations of auto-focusing, auto-exposure correction, focus change, and adjustment of depth of field.

An optical signal passing through the lens unit 110 forms an image of a subject on a light receiving surface of the imaging device 115. The imaging device 115 may be a charge coupled device (CCD), a complementary metal oxide semiconductor image sensor (CIS), or a high speed image sensor that converts an optical signal to an electric signal. Sensitivity of the imaging device 115 may be adjusted by the imaging device control unit 116. The imaging device control unit 116 may control the imaging device 115 according to a control signal that is automatically generated by an image signal that is input in real time or a control signal that is manually input by an operation of a user. An exposure time of the imaging device 115 is adjusted by using a shutter (not shown). The shutter may be a mechanical shutter for adjusting incidence of light by moving a blind or an electronic shutter for controlling exposure by applying an electric signal to the imaging device 115.

The analog signal processor 120 may perform noise reduction processing, gain control, waveform shaping, and analog-digital conversion processing on an analog signal applied by the imaging device 115.

The manipulation unit 170 is used to input an external control signal, for example, by a user. The manipulation unit 170 may include a shutter-release button for inputting a shutter-release signal for capturing an image by exposing the imaging device 115 to light for a predetermined time, a power button for inputting a control signal for controlling on/off of power, a wide zoom button and a tele-zoom button for increasing or decreasing a viewing angle according to an input, and a variety of function buttons for selecting a mode such as a text input mode, a photographing mode, a display mode, a white balance setting mode, or an exposure setting mode. The manipulation unit 170 may have a variety of types of buttons as described above, but this should not be construed as limiting. For example, the manipulation unit 170 may be embodied in any type such as a keyboard, a touch pad, a touch screen, or a remote controller, to be used by a user to input data. According to an embodiment of the present invention, a user inputs a data display operation via a touch pad or a touch screen of the display unit 160.

In the digital camera 100, main content and auxiliary content are respectively displayed on two areas of the display unit 160. In other words, the display unit may be divided into two areas, e.g., a main area and an auxiliary area, and different types of data may be respectively displayed on the main and auxiliary areas. For example, still image data may be displayed on the main area, and thumbnail video data obtained by reducing the size of video data may be displayed on the auxiliary area. In addition, the digital camera 100 may switch around the still image data and the video data respectively displayed on the main area and the auxiliary area so that the still image data and the video data are then respectively displayed on the auxiliary area and the main area, by a user's touch input, for example, by touching and dragging on the auxiliary area or by spreading or pinching two fingers on the auxiliary area. In addition, a user may touch and drag on the auxiliary area with a finger or spread two fingers on the auxiliary area to display video data, which is displayed on the auxiliary area, on the main area and display a plurality of pieces of still image data on the auxiliary area in a direction in which the fingers are spread. For example, if the fingers are spread in a horizontal direction, the auxiliary area may be expanded in the horizontal direction. On the expanded auxiliary area, the plurality of pieces of the still image data may be displayed in a sequence or in a slideshow format. The speed of displaying the plurality of pieces of still image data in a sequence or a slideshow format may be synchronized with that of displaying the video on the main area. If the fingers are spread in a vertical direction, the auxiliary area may be expanded in the vertical direction in the same manner as with the horizontal direction.

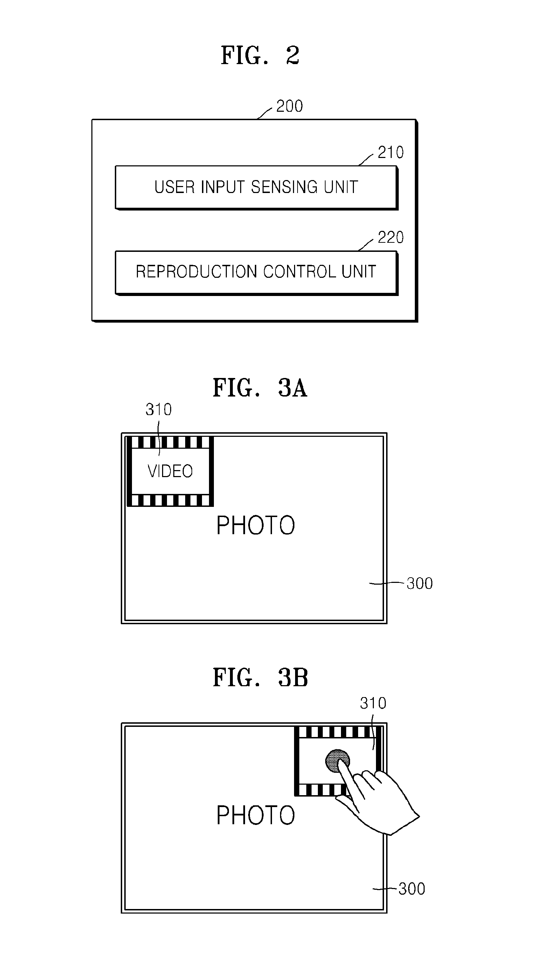

In the digital camera 100, the auxiliary area expanded in the horizontal or vertical direction may be restored to its original size by a user's input of touching and dragging on the auxiliary area in a direction opposite to the direction in which the auxiliary area was expanded or of pinching two fingers. Then, the video data displayed on the main area and the plurality of pieces of the still image data displayed on the auxiliary area in a sequence may be switched with each other. In this case, the video data shifted to the auxiliary area may be displayed as the thumbnail video data obtained by reducing the size of the video data. The plurality of pieces of still image data shifted to the main area are displayed sequentially or any one of the plurality of pieces of the still image data, for example, a piece of still image data positioned at a center of the expanded auxiliary area, may be displayed on the main area. The switching of displayed data between the main area and the auxiliary area and display operations will be described in detail later with reference to FIGS. 3A to 5B.

The digital camera 100 includes a program storage unit 130 for storing a program such as an operating system for driving the digital camera 100 or an application system, a buffer storage unit 140 for temporarily storing data required for performing an operation or resultant data, and a data storage unit 150 for storing various information required for the program, such as an image file having an image signal

The digital camera 100 includes the display unit 160 for displaying an operation state of the digital camera 100 or still image data or video data captured by the digital camera 100. The display unit 160 may provide visual information and audio information to a user. To provide visual information, the display unit 160 may include, for example, a liquid crystal display (LCD) panel or an organic light emitting display (OLED) panel. The display driving unit 162 provides a driving signal to the display unit 160.

The digital camera 100 includes the DSP 200, which processes input image signals and controls each element according to the processed input image signal or an external input signal. The DSP 200 may perform image signal processing for improving the quality of an image on input image data, such as, noise reduction, gamma correction, color filter array interpolation, color matrix processing, color correction, and color enhancement. In addition, the DSP 20 may generate an image file by compressing image data that is generated by the image signal processing for improving the quality of an image, or may restore the image data from the image file. The image data is compressed in a reversible or a non-reversible format. The compressed data may be stored in the data storage unit 150. The DSP 200 may also perform color processing, blur processing, edge emphasis processing, image interpretation processing, image recognition processing, image effect processing, etc. The image recognition processing may include face recognition processing, scene recognition processing, or the like. For example, the DSP 200 may perform brightness level adjustment, color correction, contrast adjustment, contour emphasis adjustment, screen division processing, character image generation, image synthesis processing, or the like.

Also, the DSP 200 may generate a control signal to control auto-focusing, zoom change, focus change, or auto-exposure correction by executing a program stored in the program storage unit 130 or using a separate module, and provide the generated control signal to the lens unit driving unit 111, the iris driving unit 113, and the imaging device control unit 116, so that operations of elements, such as the shutter or a flash, provided in the digital camera 100 may be generally controlled.

FIG. 2 is a block diagram of the DSP 200 illustrated in FIG. 1, according to an embodiment of the present invention.

Referring to FIG 2, the DSP 200 includes a user input sensing unit 210 and a display control unit 220. The DSP 200 should be understood as an embodiment of a display apparatus recited in the accompanying claims.

The user input sensing unit 210 senses a touch-and-drag input on a second area of the display unit 160 of FIG. 1. The touch-and-drag input means that touching and dragging are performed simultaneously. The touch-and-drag input may include a plurality of touch-and-drag inputs, e.g., touching two points and increasing/reducing the distance between the two points with fingers. In this regard, the second area is the auxiliary area of the display unit 160 as described above. For example, the user input sensing unit 210 detects whether two fingers, e.g., a thumb and an index finger, touch a touch panel, and then determines whether the distance between two points touched by the two fingers is changed. If the user spreads or pinches the two fingers, the distance between the two points increases or decreases. Thus, the user's operation of spreading or pinching the fingers may be detected by detecting a change in the distance between the two touched points.

The display control unit 220 displays first content on a first area of the display screen, and second content on a second area of the display screen. When a user input, e.g., a touch-and-drag operation or a plurality of touch-and-drag operations, is sensed on the second area, the display control unit 220 expands the second area and displays a plurality of third contents on the expanded second area. The plurality of third contents include the second content. In other words, the type of the plurality of third contents is the same as that of the second content.

According to an embodiment of the present invention, when video data is displayed on the first area, a plurality of pieces of still image data are displayed on the expanded second area. The still image data and the video data may be related to each other, and may be captured by continuous shooting, pre-recording, or a dual shot. For example, if five still images are captured within 1 minute while simultaneously shooting video for 1 minute, 1-minute video data and five still image data are displayed. The first area is the main area of the display unit 160, and the second area is the auxiliary area of the display unit 160. In this regard, the second area, i.e., the auxiliary area, may move according to a touch of a user.

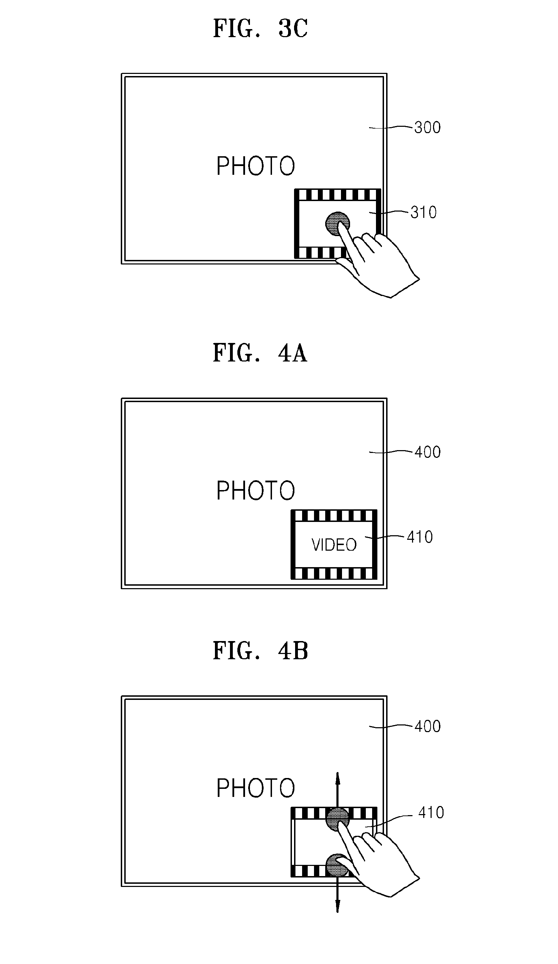

FIGS. 3A, 3B, and 3C are diagrams for describing displaying of a still image and video, according to an embodiment. Referring to FIG. 3A, a photo that is still image data is displayed on a main area 300 of a screen and a movie that is video is displayed on an auxiliary area 310 at an upper left corner of the screen. Referring to FIG. 3B, if the user touches an upper right corner of the screen, the auxiliary area 310 moves to the upper right corner. Referring to FIG. 3C, if the user touches a lower right corner of the screen, the auxiliary area 310 moves to the lower right corner.

In addition, if a movie that is video data and a photo that is still image data are respectively displayed on a first area and a second area of a display screen, then the display control unit 220 may respectively display the photo and the movie on the first and second areas when a user performs a touch-and-drag operation once or a plurality of touch-and-drag operations. When the second area is expanded or restored to its original size by a user touch operation, e.g., the touch-and-drag operation or the plurality of touch-and-drag operations, the displayed photo and the movie are switched around to be respectively displayed on the main area and the auxiliary area.

If the touch-and-drag operation or the plurality of touch-and-drag operations are performed to expand the second area in the vertical or horizontal direction of the display screen, the display control unit 220 expands the second area in the vertical or horizontal direction of the display screen. Then, a plurality of pieces of the still image data are displayed on the expanded second area. While the video data is displayed on the first area and a plurality of pieces of the still image data are displayed on the expanded second area, if the touch-and-drag operation or the plurality of touch-and-drag operations are performed in a direction opposite to which the second area was expanded to reduce the size of the expanded second area, then the expanded second area is restored into its original size, and the still image data is displayed on the first area and the video data is displayed on the restored second area.

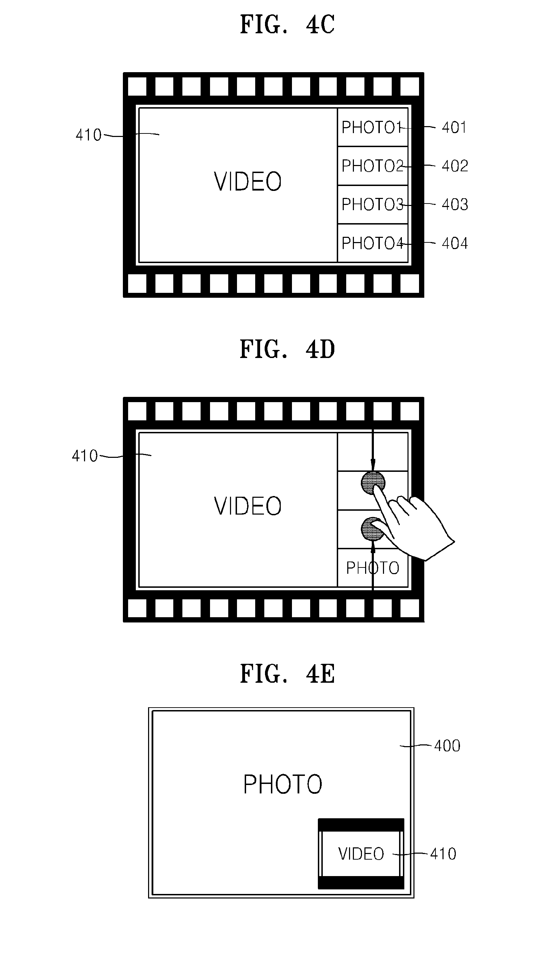

FIGS. 4A, 4B, 4C, 4D, and 4E are diagrams for describing displaying of a still image and video, according to another embodiment. Referring to FIG. 4A, a photo 400 that is still image data is displayed on a main area of a display screen, and video 410 that is video data is displayed on an auxiliary area at a lower right corner of the display screen. In this regard, the displayed video is thumbnail video obtained by reducing the size of the video data, and the still image data and the video data may be related to each other. For example, the still image data may be obtained while simultaneously shooting the video. However, the video data and the still image data are not limited thereto, and may be obtained during separate events.

Referring to FIG. 4B, a user performs a touch input of expanding the auxiliary area that displays the video in the vertical direction. The user input sensing unit 210 senses a touch-and-drag operation or a plurality of touch-and-drag operations. In other words, the user input sensing unit 210 determines whether the user performs an operation of expanding the auxiliary area.

Referring to FIG. 4C, if the user's touch input of expanding the auxiliary area as shown in FIG. 4B is detected, the main area displays the video 410, and the auxiliary area is expanded in the vertical direction and displays a plurality of pieces of the still image data, i.e., a photo 1 401, a photo 2 402, a photo 3 403, and a photo 4 404. Here, the photo 1 401, photo 2 402, photo 3 403, and photo 4 404 may be displayed in a sequence or in a slideshow format, and may be sequentially displayed upward or downward. In addition, the speed of displaying the still image data may be synchronized with that of displaying the video 410 on the main area.

Referring to FIG. 4D, when the video 410 is displayed on the main area and the plurality of pieces of the still image data 401, 402, 403, and 404 are displayed on the auxiliary area, a user performs a touch input of pinching two fingers in the vertical direction. The user input sensing unit 210 detects two touched points and then determines whether a distance between the two touched points decreases to detect the user's touch input of pinching the fingers.

Referring to FIG. 4E, if the user's touch input of pinching the fingers as shown in FIG. 4D is detected, the photo 400 is displayed on the main area, the size of the auxiliary area is reduced in the vertical direction to its original size, and then the video 410 is displayed on the auxiliary area.

In a display method according to another embodiment of the present invention, a still image and video may be conveniently displayed on the same screen together and the displayed still image and video may be switched with each other, and the entire composition of the video may be efficiently interpreted since thumbnail images of the video may be spread out. To view the video and the still image in a full screen mode, the spread thumbnail images may be reduced and displayed in a small area on the screen in a video display mode.

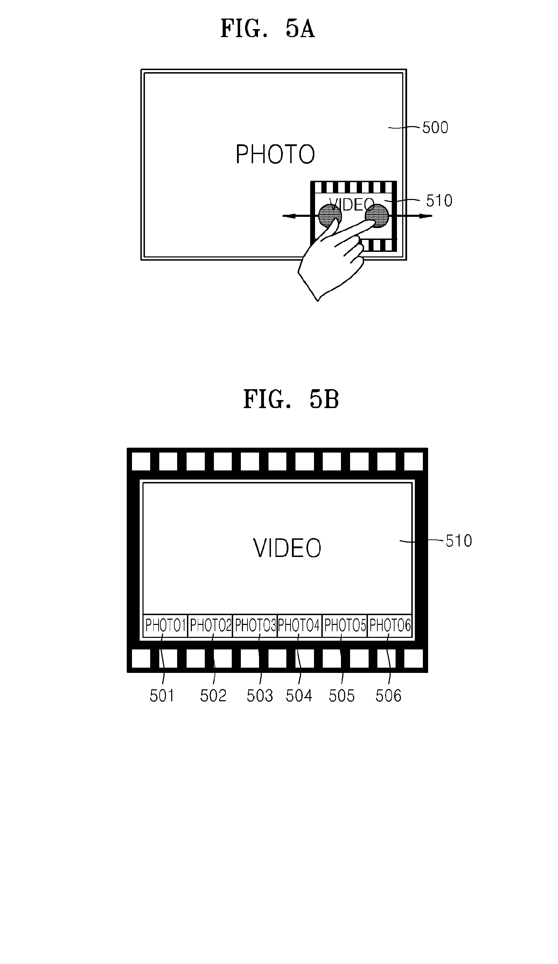

FIGS. 5A and 5B are diagrams for describing displaying of a still image and video, according to another embodiment. Referring to FIG. 5A, a photo 500 that is still image data is displayed on a main area of a display screen, and video 510 that is video data is displayed on an auxiliary area at a lower right corner of the display screen. In this regard, the displayed video 510 is a thumbnail video obtained by reducing the size of the video data. A user performs a touch input of expanding the auxiliary area that displays the video 510 in the horizontal direction. Then, the user input sensing unit 210 detects two touched points and determines whether a distance between the two touched points increases to detect the user's touch input of expanding the auxiliary area.

Referring to FIG. 5B, if the user's touch input of expanding the auxiliary area as shown in FIG. 5A is detected, the main area displays the video 510, and the auxiliary area is expanded in the horizontal direction and displays a plurality of pieces of the still image data, i.e., a photo 1 501 , a photo 2 502, a photo 3 503, a photo 4 504, a photo 5 505, and a photo 6 506. Here, the photo 1 501, photo 2 502, photo 3 503, photo 4 504, photo 5 505, and photo 6 506 may be displayed in a sequence or in a slideshow format and may be sequentially displayed in a leftward or rightward direction. In addition, the speed of displaying the still image data may be synchronized with that of displaying the video 510 on the main area.

By the user's touch input of pinching two fingers as described with reference to FIGS. 4A to 4E, a photo, e.g., one of the first to sixth photos 501 to 506 or the third or fourth photo 503 or 504 positioned at a center, is displayed on the main area, and the video 510 is displayed on the auxiliary area.

In a display method according to another embodiment of the present invention, a user interface is provided by which a still image and video that are related to each other may be displayed on the same screen, the displayed still image and video may be switched with each other, and the entire composition of the screen or a full screen mode may be selected conveniently.

According to another embodiment of the present invention, when map data is displayed on a first area of a display screen, still image data is displayed on a second area of the display screen. The map data may be either map data reflecting location information received from a global positioning system (GPS) module (not shown) included in the digital camera 100 of FIG. 1 or map data received from an external server or a map providing server. The still image data displayed on the second area contains still image data corresponding to a location defined in the map data displayed on the first area. For example, a photo captured at Gangnam Station is displayed at a location corresponding to Gangnam Station on the map data. When a touch-and-drag operation is performed on an area on which the photo captured at Gangnam Station is displayed, i.e., the second area, the second area is expanded in a direction in which the touch-and-drag operation was performed, and a plurality of other photos captured at Gangnam Station are displayed on the expanded second area.

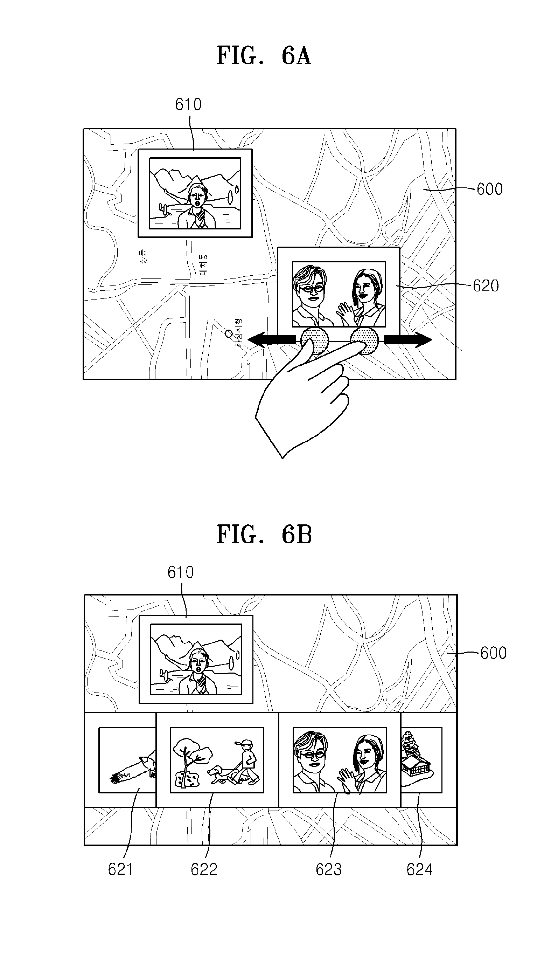

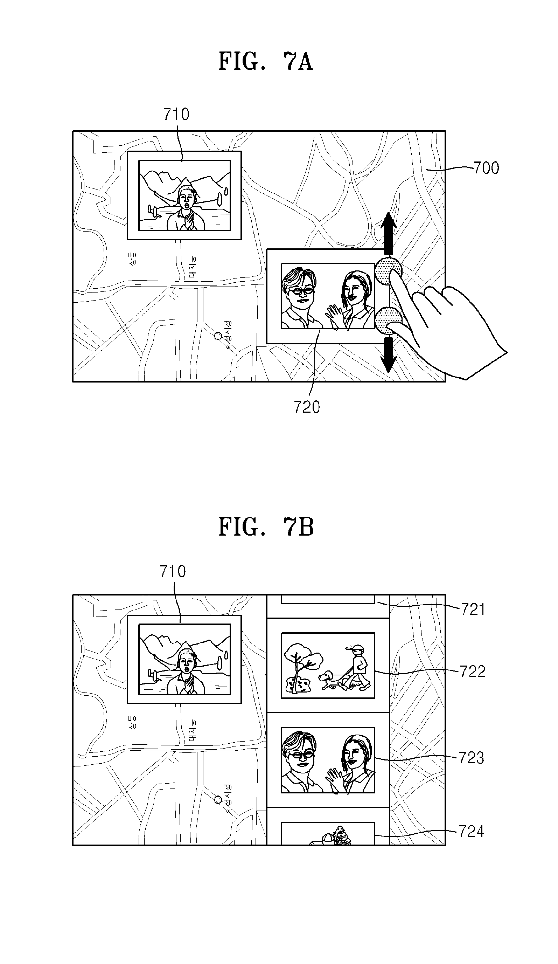

Referring to FIG. 6A, map data 600 is displayed on a main display screen area, and a first photo 610 captured at a first place and a second photo 620 captured at a second place are displayed on the map data 600. If a user touches and drags on either a second area of the map data 600 on which the second photo 620 is displayed or the second photo 620 itself in a left or right direction or the horizontal direction as illustrated in FIG. 6A, then a plurality of other photos 621 to 624 captured at the second place are displayed on the second area expanded in the left or right direction or the horizontal direction as illustrated in FIG. 6B. If a photo 720 captured at a second place is touched and dragged in an up-and-down direction or the vertical direction as illustrated in FIG. 7A, then a plurality of other photos 721 to 724 captured at the second place are displayed on a second area expanded in the up-and-down direction or the vertical direction as illustrated in FIG. 7B. Although FIGS. 6A to 7B illustrate a case where a second area is expanded by touching the second area with two fingers of a user and spreading the fingers on the second area and a plurality of photos are displayed on the expanded area, the present invention is not limited thereto and the second area may be expanded by touching and dragging in one direction. An area displaying map data and an area displaying still image data may be switched with each other as described above with reference to FIGS. 3A to 5B. Furthermore, map data and video data captured at a location on the map data may be displayed as described above with reference to FIGS. 3A to 5B.

According to another embodiment of the present invention, when broadcast data is displayed on a first area, broadcast channel data is displayed on a second area. The broadcast data may be received from a digital multimedia broadcasting (DMB) module (not shown) included in the digital camera 100 of FIG. 1. The broadcast channel data displayed on the second area includes broadcast channel information corresponding to the broadcast data displayed on the first area. If a touch-and-drag operation is performed on the second area, the second area is expanded in a direction in which dragging is performed and a plurality of pieces of other broadcast channel data provided from the digital camera 100 are displayed on the expanded second area.

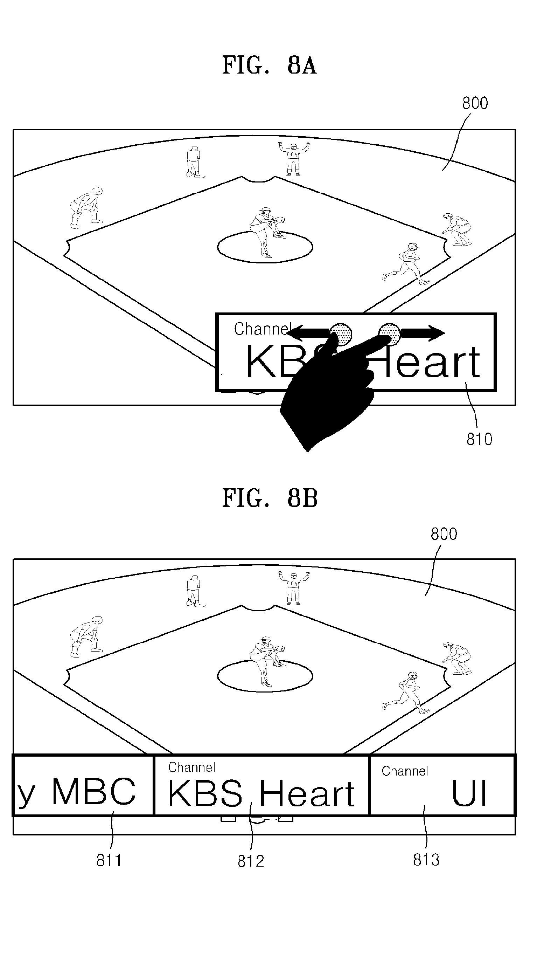

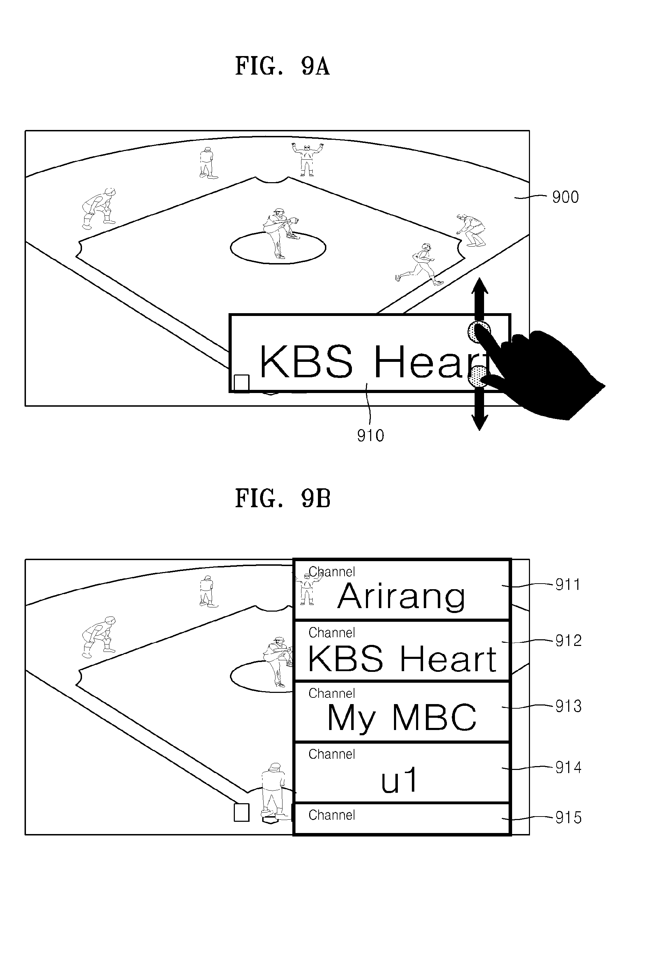

Referring to FIG. 8A, broadcast data 800 that is being broadcast is displayed on a main display screen area and broadcast channel data 810 that is being broadcast is displayed on an auxiliary display screen area. If a user touches and drags on the broadcast channel data 810 or the auxiliary display screen area displaying the broadcast channel data 810 in a left or right direction or the horizontal direction as illustrated in FIG. 8A, then the auxiliary display screen area is expanded in a direction in which the dragging is performed and a plurality of pieces of other broadcast channel data 811 to 813 are displayed on the expanded area as illustrated in FIG. 8B. If touching and dragging is performed on broadcast channel data 910 in an up-and-down direction or the vertical direction as illustrated in FIG. 9A, then a plurality of pieces of other broadcast channel data 911 to 915 are displayed on an area expanded in the up-and-down direction or the vertical direction as illustrated in FIG. 9B.

According to another embodiment of the present invention, when live view image data is displayed in a first area of a display screen, functional icons are displayed in a second area of the display screen. The live view image data is displayed on the display screen before it is captured, and a functional icon, e.g., a flash function setting icon, which may be manipulated during capturing of the live view image data is displayed on the second area. When either a functional icon displayed in the second area or the second area is touched and dragged, the second area is expanded in a direction in which the dragging was performed, and other functional icons provided in the digital camera 100 of FIG. 1 are displayed in the expanded second area.

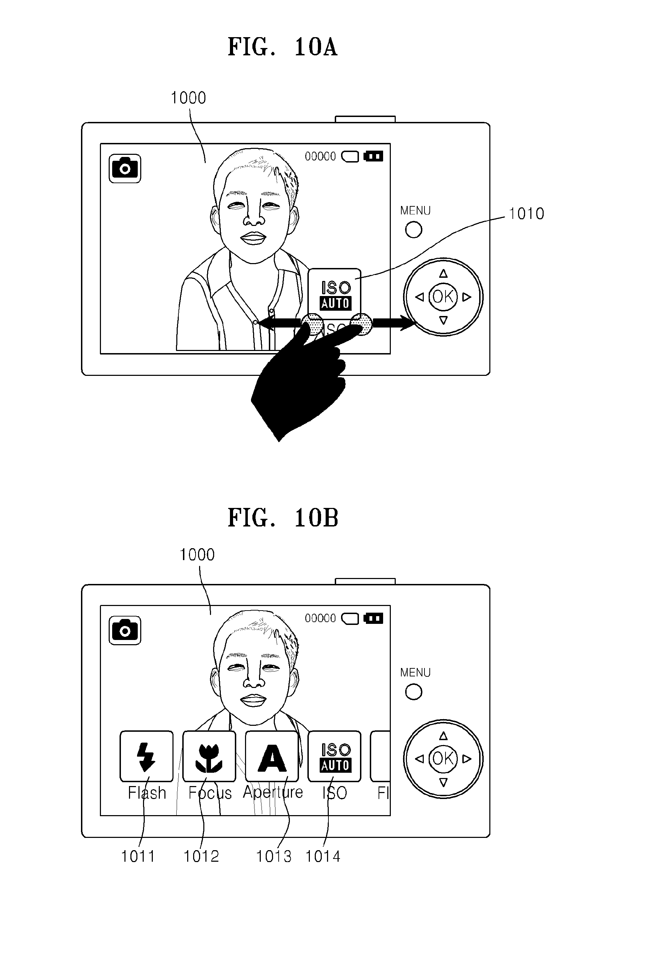

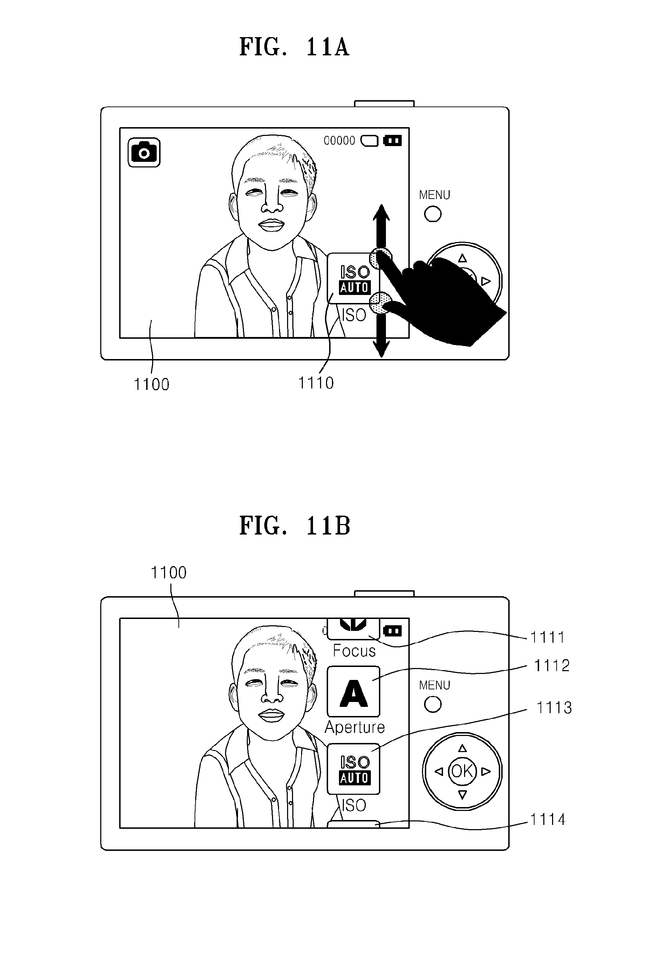

Referring to FIG. 10A, live view image data 1000 is displayed on a main display screen area, and a functional icon 1010 is displayed on an auxiliary display screen area. If a user touches and drags on the functional icon 1010 or the auxiliary display screen area displaying the functional icon 1010 in a left or right direction or the horizontal direction, then the auxiliary display screen area is expanded in the direction in which the dragging was performed and other functional icons 1011 to 1014 are displayed on the expanded auxiliary display screen area as illustrated in FIG. 10B. Referring to FIGS. 11A and 11 B, if a functional icon 1110 is touched and dragged in an up-and-down direction or the vertical direction, other functional icons 1111 to 1114 are displayed on an area expanded in the up-and-down direction or the vertical direction.

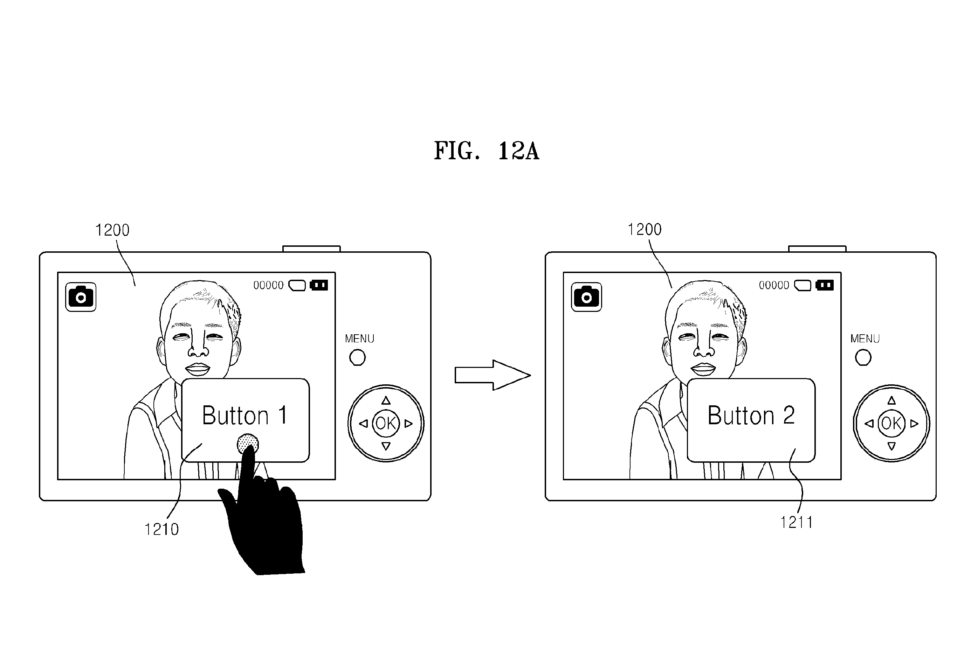

According to another embodiment of the present invention, referring to FIG. 12A, if live view image data, video data that is to be reproduced, or still image data 1200 is displayed on a first area of a display screen, a button 1 1210 that is a toggle type button is displayed on a second area of the display screen. Referring to FIG. 12A, when the button 1 1210 that is a toggle type button is moved in a left or right direction, a button 2 1211 is displayed on the second area.

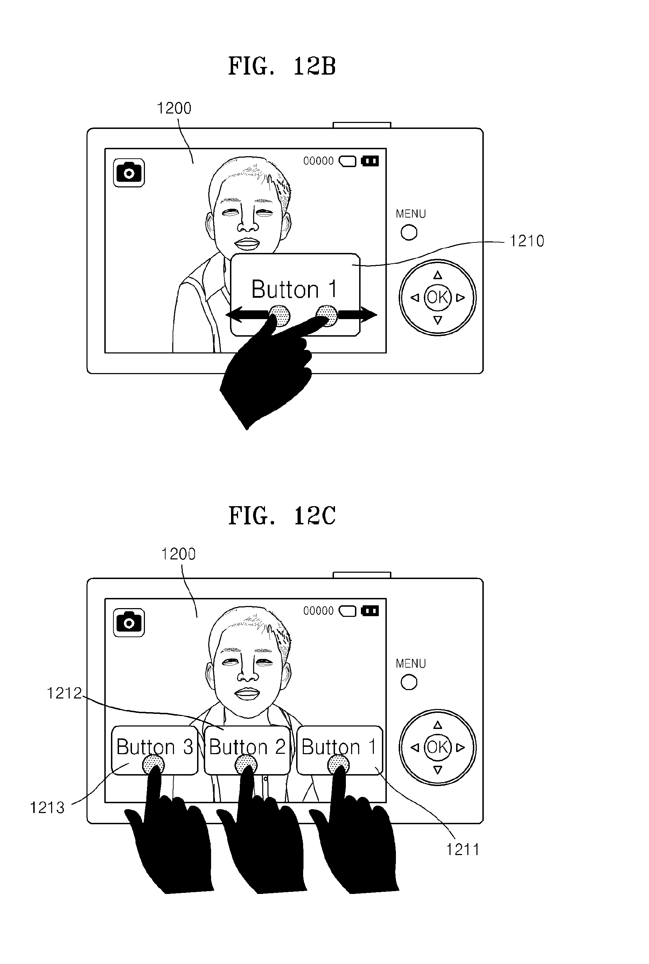

Referring to FIG. 12B, the button 1 1210 that is a toggle type button is displayed on the second area of the display screen. When a user touches and drags on the second area in a left or right direction or the horizontal direction, the second area is expanded in the direction in which the dragging was performed and buttons 1211 to 1213 in a list format are displayed on the expanded area as illustrated in FIG. 12C.

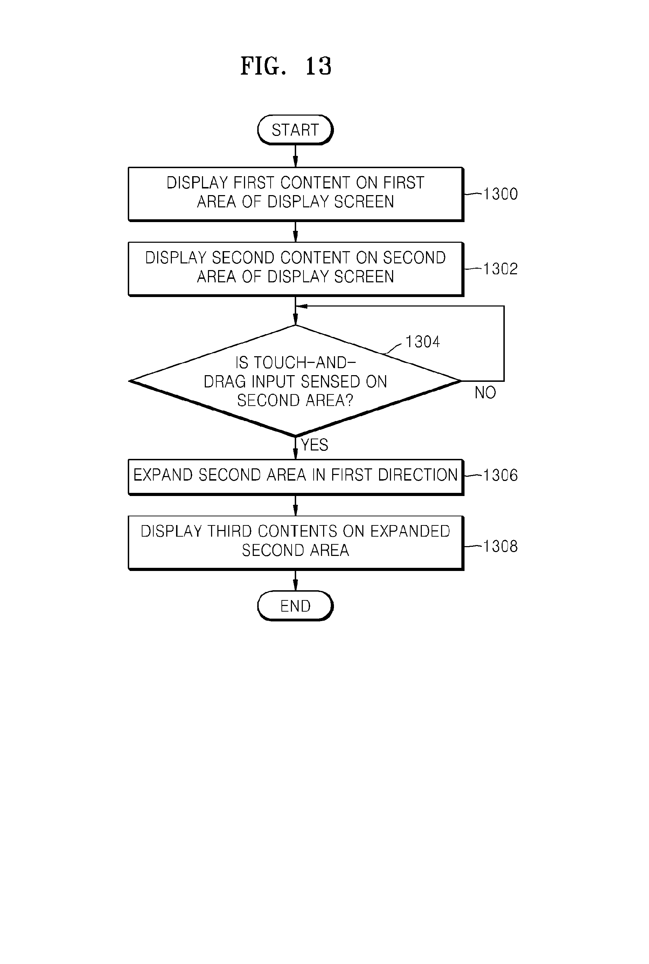

FIG. 13 is a flowchart illustrating a display method according to an embodiment of the present invention.

Referring to FIG. 13, in operation 1300, first content is displayed on a first area of a display screen. In operation 1302, second content is displayed on a second area of the display screen. Although FIG. 13 illustrates that operations 1300 and 1302 are sequentially performed, operations 1300 and 1302 may be simultaneously performed or operation 1302 may be performed before operation 1300 is performed.

In operation 1304, a touch-and-drag input is sensed on the second area. The touch-and-drag input includes touching and dragging in a direction, and a plurality of touch-and-drag operations. For example, the touch-and-drag input includes touching and dragging on the second area in a direction with one finger of a user, and touching the second area with two fingers of the user and spreading the fingers.

In operation 1306, if in operation 1304 the touch-and-drag input is sensed, the second area is expanded in a first direction. For example, the second area is expanded upward when the user touches and drags upward on the second area with one finger, and is expanded in the horizontal direction when the user touches the second area with two fingers and spreading the two fingers in the horizontal direction.

In operation 1308, a plurality of third contents are displayed on the expanded second area. The plurality of third contents include the second content.

Although not shown, if a touch-and-drag operation is sensed on the expanded second area in a direction, i.e., a downward direction, which is opposite to the direction in which the touch-and-drag operation was performed in operation 1304, for example, if the expanded second area is touched with one finger and is then dragged downward, then the expanded second area is restored to its original size. The expanded second area may also be restored to its original size when the expanded second area is touched with two fingers and the two fingers are pinched in the horizontal direction. Furthermore, a screen switch operation may be performed to restore the expanded second area to its original size, and respectively display the first content and second content on the restored second area and the first area.

A display method and apparatus according to an embodiment of the present invention are capable of displaying main content and auxiliary content on the same screen, and easily displaying more contents as auxiliary contents on an area of the screen displaying auxiliary content.

Furthermore, the display method and apparatus may provide a convenient user interface via which a user may display main content and auxiliary content to be related to each other on the same screen, and may switch the displayed contents with each other, to easily view the entire composition of the contents and view the contents in a full screen mode.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The apparatus described herein may include a processor, a memory for storing program data to be executed by the processor, a permanent storage device such as a disk drive, a communications port for handling communications with external devices, and user interface devices, including a display, keys, etc. When software modules are involved, these software modules may be stored as program instructions or computer readable code executable by the processor on a non-transitory computer-readable media such as read-only memory (ROM), random-access memory (RAM), CD-ROMs, DVDs, magnetic tapes, hard disks, floppy disks, and optical data storage devices. The computer readable recording media may also be distributed over network coupled computer systems so that the computer readable code is stored and executed in a distributed fashion. This media may be read by the computer, stored in the memory, and executed by the processor.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, Java, assembler, or the like, with the various algorithms being implemented with any combination of data structures, objects, processes, routines or other programming elements. Functional aspects may be implemented in algorithms that are executed in one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism" and "element" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display control unit for displaying first content on a first area of a display screen, and second content on a second area of the display screen; and
a user input sensing unit for sensing a touch-and-drag input on the second area,
wherein the display control unit expands the second area in a first direction according to the sensed touch-and-drag input, and displays a plurality of third contents on the expanded second area.

2. The display apparatus of claim 1, wherein the plurality of third contents comprise the second content.

3. The display apparatus of claim 1 or 2, wherein the first direction comprises a direction in which dragging is performed.

4. The display apparatus of claim 1, 2 or 3, wherein the sensed touch-and-drag input comprises a plurality of touch-and-drag inputs, and
the second area is expanded in directions in which drag inputs included in the plurality of touch-and-drag inputs are performed.

5. The display apparatus of any preceding claim, wherein the user input sensing unit senses a touch and drag input performed in a direction that is different from a direction in which the sensed touch-and-drag input is performed, and
the display control unit reduces the expanded second area to its original size, according to the drag input performed in the different direction.

6. The display apparatus of any preceding claim, wherein the first content is video data, and
the second content is still image data.

7. The display apparatus of claim 6, wherein the still image data constitutes part of the video data.

8. The display apparatus of claim 6 or 7, wherein the second content is thumbnail still image data obtained by reducing the size of the still image data.

9. The display apparatus of claim 6, 7, or 8, wherein the display control unit displays the plurality of third contents in a slideshow format.

10. The display apparatus of claim 9, wherein the display control unit displays the plurality of third contents at a speed corresponding to a speed of displaying the video data.

11. The display apparatus of any preceding claim, wherein the first area is a main area of the display screen, and
the second area is an auxiliary area of the display screen.

12. The display apparatus of any preceding claim 1, wherein the second area is movable on the display screen by touching and dragging the second area on the display screen.

13. The display apparatus of claim 1, wherein the first content is map data, and
the second data is still image data.

14. The display apparatus of claim 13, wherein the still image data corresponds to a location on the map data.

15. The display apparatus of any one of claims 1 to 12, wherein the first content is broadcast data, and
the second content is broadcast channel data.

16. The display apparatus of claim 15, wherein the plurality of third contents comprise broadcast channel data provided from the display apparatus.

17. The display apparatus of claim 15, wherein the second content is a toggle type button icon, and
the plurality of third contents are button icons in a list format.

18. The display apparatus of any one of claims 1 to 12, wherein the first content is live view image data, and
the second content is a functional icon.

19. A display method comprising:
displaying first content on a first area of a display screen, and second content on a second area of the display screen;
sensing a touch-and-drag input on the second area;
expanding the second area in a first direction according to the sensed touch-and-drag input; and
displaying a plurality of third contents on the expanded second area.
